(19) Europäisches Patentamt
European Patent Office
Office européen des brevets

(11) **EP 1 457 319 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
*B32B 27/36* (2006.01)   *B32B 27/20* (2006.01)

(21) Anmeldenummer: **04000702.3**

(22) Anmeldetag: **15.01.2004**

(54) **Mehrschichtige transparente, biaxial orientierte Polyesterfolie, Verfahren zu ihrer Herstellung und ihre Verwendung**

Multilayered, transparent and biaxially oriented polyester foil, its method of making and its use

Feuille multicouche et transparente en polyester biaxialement orientée, son procédé de fabrication et utilisation

(84) Benannte Vertragsstaaten:
**DE GB LU**

(30) Priorität: **20.01.2003 DE 10301786**

(43) Veröffentlichungstag der Anmeldung:
**15.09.2004 Patentblatt 2004/38**

(73) Patentinhaber: **Mitsubishi Polyester Film GmbH 65203 Wiesbaden (DE)**

(72) Erfinder:
• **Peiffer, Herbert, Dr., Professor 55126 Mainz (DE)**
• **Hilkert, Gottfried, Dr. 55291 Saulheim (DE)**

(74) Vertreter: **Schweitzer, Klaus et al Zounek Plate Schweitzer Patentanwaltskanzlei Rheingaustrasse 196 65203 Wiesbaden (DE)**

(56) Entgegenhaltungen:
**EP-A- 0 144 948      EP-A- 1 197 328
EP-A- 1 234 848**

**Beschreibung**

Die Erfindung betrifft eine mehrschichtige transparente, biaxial orientierte Polyesterfolie mit mindestens einer Basisschicht B aus einem thermoplastischen Polyester, mindestens einer auf der Basisschicht B coextrudierten Deckschicht A und mindestens einer acrylathaltigen Schicht D. Die Erfindung betrifft weiter ein Verfahren zur Herstellung der Folie und ihre Verwendung.

Biaxial orientierte Polyesterfolien, die auf wenigstens einer ihrer beiden Oberflächen eine durchgehende Beschichtung tragen, sind nach dem Stand der Technik bekannt. Ebenfalls nach dem Stand der Technik bekannt sind biaxial orientierte Polyesterfolien, die sich durch sehr gute optische Eigenschaften auszeichnen.

In der EP-A-0 144 978 wird eine orientierte Folie aus thermoplastischem Kunststoff beschrieben, die auf wenigstens einer ihrer beiden Oberflächen eine durchgehende Polyesterbeschichtung trägt, die als wässrige Dispersion auf die Folie aufgebracht wird. Die Polyesterbeschichtung besteht aus einem Kondensationsprodukt von verschiedenen zur Bildung von Polyestern befähigten Derivaten, wie Isophthalsäure, aliphatische Dicarbonsäure, Sulfomonomeren und aliphatischen oder cycloaliphatischen Glykols. Die Folie zeichnet sich insbesondere durch eine gute Haftung zu Metallen auf. Nachteilig an der Folie sind ihre optischen Eigenschaften, wie Transparenz oder Glanz. Auf Grund dieses Nachteiles wird diese Folie nicht mehr bei hochwertigen Verpackungsanwendungen eingesetzt.

In der EP-A-0 144 948 wird eine orientierte Folie aus thermoplastischem Kunststoff beschrieben, welche auf wenigstens einer ihrer beiden Oberflächen eine durchgehende vernetzte acrylathaltige Beschichtung trägt, die als wässrige Dispersion auf die Folie aufgebracht wird. Die acrylathaltige Beschichtung besteht aus Copolymeren mit mindestens 50 Gew.-% acrylischen und/oder methacrylischen Monomeren, 1-15 Gew.-% Monomeren, enthaltend eine funktionelle Gruppe, die befähigt ist, in copolymerisiertem Zustand unter Einwirkung von erhöhten Temperaturen intermolekulare Vernetzungen einzugehen, sowie einem oder mehreren einfach ethylenisch ungesättigten, halogenfreien Monomeren in einer Menge bis zu 49 Gew.-%, wobei die Prozentangaben jeweils auf das Gesamtgewicht des die Haftvermittlerschicht bildenden Copolymeren bezogen sind. Die Folie weist eine gute Bedruckbarkeit auf und ist sterilisierfähig. Nachteilig an der Folie sind ihre optischen Eigenschaften, wie Transparenz oder Glanz. Auf Grund dieses Nachteiles wird diese Folie nicht mehr bei hochwertigen Verpackungsanwendungen eingesetzt.

Die EP-A-0 903 221 betrifft eine zumindestens dreischichtige, biaxial orientierte Polyesterfolie, die bei sehr gutem Verarbeitungsverhalten gegenüber Folien aus dem Stand der Technik verbesserte optische Eigenschaften aufweist und die nach ihrer Metallisierung oder nach ihrer Beschichtung mit oxidischen Materialien eine gute Sauerstoffbarriere besitzt, und die aus mindestens einer Basisschicht B und auf dieser Basisschicht aufgebrachten Deckschichten A und C aufgebaut ist, wobei diese Deckschichten eine definierte Anzahl von Erhebungen mit einer definierten Höhe und einem definierten Durchmesser aufweist. Die EP-A betrifft weiter ein Verfahren zur Herstellung der Folie und ihre Verwendung. Das Laufverhalten dieser Folie insbesondere bei schnelllaufenden Verpackungsmaschinen ist noch verbesserungswürdig. Weiter verbesserungswürdig ist die Rollenaufmachung von derart hergestellten Folien. Eine sehr gute Rollenaufmachung wird insbesondere bei der Metallisierung oder bei der Verarbeitung der Folien zu Heißprägefolien benötigt.

EP-A-1197328 beschreibt einen koextrudierten, biaxal orientierten Film, der mindestens eine matte Oberfläche aufweist, und eine Basisschicht aus einem thermoplastischen Polyester und mindestens eine matte Deckschicht aus einer Mischung aus PET und einem Isophthalsäure Copolymer enthält.

Aufgabe der vorliegenden Erfindung war es somit, eine transparente, biaxial orientierte Polyesterfolie mit hervorragenden optischen Eigenschaften und einer guten Verarbeitbarkeit zur Verfügung zu stellen. Insbesondere war es Aufgabe der vorliegenden Erfindung, eine Folie bereitzustellen, die sich durch eine hervorragende Rollenaufmachung auszeichnet und auf schnelllaufenden Maschinen, das können Verpackungsmaschinen, Bedruckungsmaschinen, Metallisierer oder andere Bedampfungsanlagen sein, sehr gut verarbeitet werden kann. Zudem sollte die Folie gut bedruckbar sein, insbesondere mit Nitro-Cellulose-Farben. Außerdem soll die Folie sterilisierfähig sein. Beim Herstellen der Folie soll weiter gewährleistet sein, dass Folienverschnitt, der als Regenerat anfällt, in einer Menge von bis zu 60 Gew.-%, bezogen auf das Gesamtgewicht der Folie, wieder der Extrusion und Folienherstellung zugeführt werden kann, ohne dass dabei die physikalischen Eigenschaften der Folie nennenswert negativ beeinträchtigt werden.

Gelöst wird die Aufgabe durch eine coextrudierte, zumindest zweischichtige transparente, biaxial orientierte Polyesterfolie mit mindestens einer Basisschicht B, die mindestens 80 Gew.-% thermoplastischen Polyester enthält, mindestens einer auf der Basisschicht B coextrudierten Deckschicht A und mindestens einer acrylischen Schicht D, deren kennzeichnende Merkmale darin zu sehen sind, dass

a) die Basisschicht B nur solche Füllstoffe enthält, die über eine Regenerierung von Verschnittmaterial in die Basisschicht B eingebracht werden;
b) die Deckschicht A Füllstoffe in einer Menge von 500 bis 2500 ppm enthält, bezogen auf das Gewicht der Deckschicht A;
c) die Füllstoffe im Wesentlichen aus $SiO_2$ bestehen mit einem mittleren Partikeldurchmesser $d_{50}$ im Bereich von

10 bis 60 nm und/oder von 1,0 bis 5 μm; und dass

d) mindestens eine der beiden Folienoberflächen eine durchgehende, vernetzte acrylische Beschichtung D trägt, die als wässrige Dispersion auf die Folie aufgebracht wird.

Überraschend hat sich gezeigt, dass durch die Anwesenheit einer vernetzten, acrylischen Beschichtung D auf zumindest einer Folienoberfläche sowohl die Rollenaufmachung als auch die Verarbeitbarkeit der Folie deutlich verbessert werden konnte, ohne dass dabei die hervorragenden optischen Eigenschaften der Folie verschlechtert werden. Weiter unerwartet hat sich gezeigt, dass die hervorragenden optischen Eigenschaften der Folie auch dann nicht vermindert werden, wenn das bei der Folienherstellung anfallende Verschnittmaterial, das in aller Regel Teilmengen der acrylischen Beschichtung enthält, als Eigenregenerat in die Basisschicht B der Folie zugesetzt wird.

Erfindungsgemäß ist die Folie mindestens zweischichtig aufgebaut und besteht dann aus der Basisschicht B und der Deckschicht A. Eine dieser beiden Schichten trägt die durchgehend vernetzte acrylische Beschichtung D, die als wässrige Dispersion auf die Folie aufgebracht wird. Bevorzugt wird in diesem Fall die acrylische Beschichtung D auf die nur wenig Füllstoffe enthaltene Basisschicht B aufgebracht. In einer bevorzugten Ausführungsform ist die Folie nach der vorliegenden Erfindung dreischichtig aufgebaut und umfasst dann eine Basisschicht B und zwei Deckschichten A und C. Bevorzugt wird in diesem Fall die acrylische Beschichtung D auf diejenige Deckschicht aufgebracht, die weniger Füllstoffe enthält als die andere Deckschicht. In einer besonders bevorzugten Ausführungsform ist die Folie nach der vorliegenden Erfindung dreischichtig aufgebaut und umfasst dann eine Basisschicht B und die beiden Deckschichten A und C, wobei die beiden Deckschichten A und C gleich rezepturiert sind. Diese Ausführungsform wird als ABA-Variante der dreischichtigen Ausführungsform bezeichnet.

Die Basisschicht B der Folie enthält bevorzugt mindestens 90 Gew.-% thermoplastischen Polyester. Dafür bestens geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexan-dimethylenterephthalat), PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A oder der Schicht C vorkommen können.

Geeignete andere aliphatische Diole sind beispielsweise Diethylenglykol, Triethylenglykol, aliphatische Glykole der allgemeinen Formel HO-(CH$_2$)n-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für -CH$_2$-, -C(CH$_3$)$_2$-, - C(CF$_3$)$_2$-, -O-, -S- oder -SO$_2$- steht. Daneben sind auch Bisphenole der Formel HO-C$_6$H$_4$-C$_6$H$_4$-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Deckschichten A und C können prinzipiell die gleichen Polymeren verwendet werden wie für die Basisschicht B. Daneben können in den Deckschichten A und C auch andere Materialien enthalten sein, wobei dann die Deckschichten A und C bevorzugt aus solchen Polymeren bestehen, die Ethylen-isophthalat-Einheiten und/oder Ethylen-2,6-naphthalat-Einheiten und Ethylen-terephthalat-Einheiten enthalten. Bis zu 30 mol-% der Polymeren können aus weiteren Comonomeren bestehen. In einer vorteilhaften Ausgestaltung der Erfindung kann die beschichtete Deckschicht A oder C ein Gemisch von Polymeren, ein Copolymeres oder ein Homopolymer aus Ethylen-isophthalat-Einheiten enthalten.

Zwischen der Basisschicht B und der (den) Deckschicht(en) A und C kann sich gegebenenfalls noch eine Zwischenschicht befinden. Sie kann aus den für die Basisschicht B beschriebenen Polymeren bestehen. In einer besonders bevorzugten Ausführungsform besteht sie aus dem für die Basisschicht B verwendeten Polyester. Die Zwischenschicht kann auch die beschriebenen üblichen Additive enthalten. Die Dicke der Zwischenschicht ist im allgemeinen größer als 0,3 $\mu$m und liegt vorzugsweise im Bereich von 0,5 bis 15 $\mu$m, insbesondere von 1,0 bis 10 $\mu$m.

Die Dicke der Deckschicht(en) A und C ist im allgemeinen größer als 0,1 $\mu$m und liegt vorzugsweise im Bereich von 0,2 bis 5 $\mu$m, insbesondere von 0,2 bis 4 $\mu$m, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 50 $\mu$m, bevorzugt 5 bis 40 $\mu$m, besonders bevorzugt 6 bis 30 $\mu$m, wobei die Basisschicht B einen Anteil von vorzugsweise 40 bis 95 % an der Gesamtdicke der Folie hat.

Die Basisschicht B und die anderen Schichten können zusätzlich übliche Additive, wie Stabilisatoren, Antiblockmittel und andere Füllstoffe, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Antiblockmittel:

Typische Antiblockmittel (in diesem Zusammenhang auch als Pigmente bezeichnet) sind anorganische und/ oder organische Partikel, beispielsweise Calciumcarbonat, amorphe Kieselsäure, pyrogene Kieselsäure, sphärische Siliziumdioxidpartikel, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Eine detaillierte Beschreibung der Antiblockmittel findet sich beispielsweise in der EP-A-0 602 964.

Die Deckschicht(en) A und C der Folie nach der vorliegenden Erfindung enthält (enthalten) bevorzugt Antiblockmittel aus Silika ($SiO_2$) in kolloidaler und in kettenartiger Form. Die eingesetzten Antiblockmittel sind dabei:

- Teilchen mit einem mittleren Primärpartikeldurchmesser von 10 bis 60 nm, bevorzugt von 15 bis 55 nm und besonders bevorzugt von 20 bis 50 nm und/oder
- Teilchen mit einem mittleren Primärpartikeidurchmesser $d_{50}$ im Bereich von 1 bis 5,0 $\mu$m, bevorzugt im Bereich von 1,5 bis 4,0 $\mu$m und besonders bevorzugt im Bereich von 2,0 bis 3,0 $\mu$m.

Teilchen, die dieser Beschreibung genügen, eignen sich insbesondere für die Herstellung von Folien, die sehr gute optische Eigenschaften wie hoher Glanz und niedrige Trübung aufweisen sollen.

Weiterhin hat es sich als besonders günstig erwiesen, wenn die Verteilung des Partikeldurchmessers d der eingesetzten Antiblockmittel innerhalb bestimmter Grenzen/Bereiche liegt. Zur Erzielung einer möglichst niedrigen Trübung und eines möglichst hohen Glanzes enthält (enthalten) die Deckschicht(en) A und C der Folie ein Pigmentsystem, bei dem die Streuung des Durchmessers d (ausgedrückt durch den SPAN 98) kleiner/gleich 1,9 ist, vorzugsweise kleiner/gleich 1,7.

Die Pigmentkonzentration in der Deckschicht A liegt zwischen 500 und 2500 ppm, bevorzugt zwischen 600 und 2200 ppm und besonders bevorzugt zwischen 700 und 1900 ppm. In der besonders bevorzugten Ausgestaltung der Erfindung ist die Folie dreischichtig aufgebaut und enthält dann die zusätzliche Deckschicht C. Die Pigmentkonzentration in der Deckschicht C liegt dann zwischen 50 und 2500 ppm, bevorzugt zwischen 100 und 2300 ppm und ganz besonders bevorzugt zwischen 150 und 2100 ppm. Sie richtet sich insbesondere nach dem gewünschten Verarbeitungsverhalten der Folie. Vorzugsweise wird/werden die Pigmentart/en, die Pigmentkonzentration/en und die Partikelkonzentration/en als auch die Schichtdickenverhältnisse so gewählt, dass eine gute Optik, sowie eine gute Herstellbarkeit und Verarbeitbarkeit der Folie gegeben ist.

Beschichtung D:

Erfindungsgemäß ist mindestens eine Seite der Folie mit einer wässrigen Dispersion beschichtet. Die Beschichtung D auf der fertigen Folie weist eine Dicke von 5 bis 2000 nm, bevorzugt 10 bis 500 nm, insbesondere 20 bis 200 nm auf. Die Beschichtung D wird bevorzugt In-line aufgebracht, d.h. während des Folienherstellprozesses, zweckmäßigerweise vor dem Querstrecken. Besonders bevorzugt ist das Aufbringen der Beschichtung D mittels des "Reverse gravure-roll coating"-Verfahrens, bei dem sich die Beschichtungen D äußerst homogen in Schichtdicken bis 100 nm auftragen lassen. Ebenfalls bevorzugt ist das Aufbringen der Beschichtung D durch das Meyer-Rod-Verfahren, mit dem sich größere Beschichtungsstärken erzielen lassen. Die Beschichtung D wird bevorzugt als Lösung, Suspension oder Dispersion aufgetragen, besonders bevorzugt als wässrige Lösung, Suspension oder Dispersion. Die genannte Beschichtung D verleiht der Folienoberfläche, bzw. der Folie die gewünschten Funktionen (niedriger Reibkoeffizient, gute Verarbeitbarkeit, gute Rollenaufmachung, geringe statische Aufladung) und mögliche weitere Funktionen. Beispielsweise kann die Folie dadurch besser bedruckbar oder mit verbesserter Aromabarriere ausgerüstet sein oder die Haftung zu Materialien ermöglichen, die sonst nicht auf der Folienoberfläche haften würden (z.B. photographische Emulsionen).

Die genannten Stoffe/Zusammensetzungen werden als verdünnte Lösung, Emulsion oder Dispersion vorzugsweise als wässrige Lösung, Emulsion oder Dispersion auf eine oder auf beide Folienoberflächen aufgebracht und anschließend das Lösungsmittel oder das Dispersionsmittel verflüchtigt. Wird die Beschichtung D In-line vor dem Querstrecken aufgebracht, reicht gewöhnlich die Temperaturbehandlung in der Querstreckung und der anschließenden Hitzefixierung aus, um das Lösungsmittel oder das Dispersionsmittel zu verflüchtigen und die Beschichtung D zu trocknen.

Als Feststoffbestandteil enthält die wässrige Dispersion Acrylcopolymere. Die bevorzugt verwendeten Copolymeren bestehen im Wesentlichen aus mindestens 50 Gew.-% eines oder mehrerer polymerisierter acrylischer und/ oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Copolymeren ist vorzugsweise in einer Menge von 50 bis 99 Gew.-% anwesend und besteht bevorzugt aus einem Ester der Acryl- oder Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C, bis $C_4$) abgeleitet sind, insbesondere Ethylacrylat, ergeben zusammen mit einem niederen Alkylmethacrylat eine besonders gute Haftung zwischen der Polyesterfolie und darauf aufgebrachten reprografischen Beschichtungen und Mattbeschichtungen. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat-Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden, wie z.B. N-Methylolacrylamid, N-Methylolmethacrylamid und die entsprechenden Ether; Epoxidmaterialien wie z.B. Glycidylacrylat, Glycidylmethacrylat und Allylglycidylether; Carboxylgruppen enthaltende Monomere wie z.B. Crotonsäure, Itaconsäure oder Acrylsäure; Anhydride wie z.B. Maleinsäureanhydrid; Hydroxylgruppen enthaltende Monomere wie z.B. Itaconsäureanhydrid; Hydroxylgruppen enthaltende Monomere wie z.B. Allylalkohol und Hydroxyethyl- oder Hydroxypropylacrylat oder -methacrylat; Amide wie z.B. Acrylamid, Methacrylamid oder Maleinsäureamid und Isocyanate wie z.B. Vinylisocyanat oder Allylisocyanat. Von den oben genannten vernetzenden Comonomeren werden N-Methylolacrylamid und N-Methylolmethacrylamid bevorzugt, und zwar in erster Linie deswegen, weil Copolymerenketten, die eines dieser Monomeren enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z.B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die oben beschriebene, erfindungsgemäße Beschichtung D ist ausführlich in der EP-A-0 144 948 dargestellt . Dieser Stand der Technik gibt auch Auskunft über weitere spezifische Kombinationen solcher gemischten Acrylcopolymeren, auf deren Wiedergabe im Detail hier verzichtet wird.

Die Beschichtung D kann ein- oder beidseitig auf die Folie aufgebracht werden. Es ist aber auch möglich, nur eine Seite der Folie mit der erfindungsgemäßen Beschichtung D zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

Bei der zweischichtigen Grundvariante aus Basisschicht B und pigmentierter Deckschicht A wird bevorzugt die weniger Pigment enthaltende Basisschicht B mit der wässrigen acrylischen Dispersion beschichtet. In diesem Fall sind die Eigenschaftsverbesserungen hinsichtlich Verarbeitungsverhalten und Rollenaufmachung besonders ausgeprägt. In Spezialfällen kann aber auch die Deckschicht A die acrylische Beschichtung D aufweisen.

In der bevorzugten dreischichtigen Variante der Folie gemäß der vorliegenden Erfindung mit der Basisschicht B und den beiden Deckschichten A und C erhält vorzugsweise diejenige Schicht die acrylische Beschichtung D, die eine geringere Konzentration an Antiblockmittel aufweist. In diesem Fall sind die Eigenschaftsverbesserungen hinsichtlich Verarbeitungsverhalten und Rollenaufmachung besonders ausgeprägt. In Spezialfällen kann aber auch die andere Deckschicht oder beide Deckschichten A und C die acrylische Beschichtung D aufweisen.

In der besonders bevorzugten dreischichtigen Variante der Folie gemäß der vorliegenden Erfindung mit der Basisschicht B und den beiden gleichen oder nahezu gleichen Deckschichten A und C (ABA-Variante) kann die acrylische Beschichtung D wahlweise auf die eine oder die andere Seite aufgebracht werden, ohne dass sich dabei entscheidende Vor- oder Nachteile ergeben. In Spezialfällen können auch beide Deckschichten A und C die acrylische Beschichtung D aufweisen. Bei dieser besonders bevorzugten Variante der Folie nach der vorliegenden Erfindung ist der Reibungskoeffizient (COF) der Folienseite, die die acrylische Beschichtung D trägt, besonders niedrig. Auf dieser (beschichteten Seite) der Folie ist der Reibkoeffizient dann kleiner als 0,5, bevorzugt kleiner als 0,45 und besonders bevorzugt kleiner als 0,4. Der niedrige Reibungskoeffizient trägt dabei wesentlich zu einem guten Verarbeitungsverhalten der Folie und zu einer guten Rollenaufmachung bei.

Ein besonderer Vorteil besteht darin, dass die Herstellkosten der erfindungsgemäßen Folie nur unwesentlich über denen einer Folie aus Standardpolyesterrohstoffen liegen. Die verarbeitungs- und gebrauchsrelevanten Eigenschaften der erfindungsgemäßen Folie sind aber gegenüber Folien nach dem Stand der Technik deutlich verbessert.

Daneben ist bei der Herstellung der Folie gewährleistet, dass das Regenerat zu einem Anteil von bis zu 60 Gew.-%, bevorzugt von 10 bis 50 Gew.-%, jeweils bezogen auf das Gesamtgewicht der Folie, wiederverwendet werden kann, ohne dass dabei die physikalischen Eigenschaften der Folie nennenswert negativ beeinflusst werden.

Gegenstand der vorliegenden Erfindung ist auch ein Verfahren zur Herstellung dieser Folie. Es umfasst:

► Das Herstellen einer mehrschichtigen Folie aus einer Basisschicht B und Deckschicht(en) A und ggf. C durch Koextrusion;
► das Strecken der Folie in Längs- und Querrichtung (biaxial);
► das Beschichten der Folie mit der acrylischen vernetzenden Beschichtung D, vorzugsweise zwischen dem ersten und dem zweiten Streckschritt, und
► das Thermofixieren der biaxial gestreckten Folie.

Zum Herstellen der Deckschicht A und ggf. der Deckschicht C wird zweckmäßig das Granulat aus Polyethylenterephthalat und das Masterbatch aus Polyethylenterephthalat/Antiblockmittel im gewünschten Mischungsverhältnis direkt dem (den) Extruder(n) zugeführt. Die Materialien lassen sich bei etwa 300 °C aufschmelzen und extrudieren.

Die Polymeren für die Basisschicht B werden zweckmäßig über einen weiteren Extruder zugeführt. Etwa vorhandene Fremdkörper oder Verunreinigungen lassen sich aus der Polymerschmelze abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird im allgemeinen sequentiell durchgeführt. Dabei wird vorzugsweise zuerst in Längsrichtung (d.h. in Maschinenrichtung) und anschließend in Querrichtung (d.h. senkrecht zur Maschinenrichtung) gestreckt. Dies führt zu einer Orientierung der Molekülketten innerhalb des Polyesters. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung bei 80 bis 130 °C und die Querstreckung bei 90 bis 150 °C durchgeführt. Das Längsstreckverhältnis liegt dabei im Bereich von 2,5:1 bis 6:1, bevorzugt von 3:1 bis 5,5:1. Das Querstreckverhältnis liegt dabei im Bereich von 3,0:1 bis 5,0:1, bevorzugt von 3,5:1 bis 4,5:1.

Bei dem nachfolgenden Thermofixieren wird die Folie über eine Zeitdauer von etwa 0,1 bis 10 s bei einer Temperatur von 150 bis 250 °C gehalten. Anschließend wird die Folie in üblicher Weise aufgewickelt.

Überraschend zeigt die mit dem zuvor beschriebenen acrylischen Polymeren beschichtete Folie ein sehr gutes Handling, sehr gute Wickeleigenschaften und ein sehr gutes Verarbeitungsverhalten. Die Folie nach der vorliegenden Erfindung zeichnet sich durch hervorragende optische Eigenschaften, eine hervorragende Weiterverarbeitung und durch eine ausgezeichnete Rollenaufmachung aus. Die Folie eignet sich somit auf Grund ihres sehr guten Handlings und auf Grund ihrer sehr guten Verarbeitungseigenschaften insbesondere für die Verarbeitung auf schnelllaufenden Maschinen.

Die Folie nach der vorliegenden Erfindung zeichnet sich daneben auch durch einen hohen Glanz und durch eine geringe Trübung gegenüber Folien nach dem Stand der Technik aus. Der Glanz der Deckschicht A (und gegebenenfalls der Deckschicht C) ist größer als 180. In einer bevorzugten Ausführungsform beträgt der Glanz dieser Seite(n) mehr als 190 und in einer besonders bevorzugten Ausführungsform mehr als 200. Die Folie mit diesem Glanz eignet sich besonders für die Bedruckung oder für die Metallisierung. Der hohe Glanz der Folie überträgt sich auf den Druck oder die aufgebrachte Metallschicht und verleiht somit dem Endprodukt das gewollte werbewirksame Aussehen. Die Trübung der Folie ist niedriger als 2,5 %, bevorzugt kleiner als 2,2 % und besonders bevorzugt kleiner als 1,9 %.

Bei der Herstellung der Folie hat sich überraschend gezeigt, dass Verschnittmaterial als Regenerat in einer Menge von bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genussmitteln aller Art.

Die nachstehende Tabelle (Tabelle 1) fasst die wichtigsten erfindungsgemäßen Folieneigenschaften noch einmal zusammen.

Tabelle 1

| | Erfindungsgemäßer Bereich | Bevorzugt | Besonders bevorzugt | Einheit | Messmethode |
|---|---|---|---|---|---|
| Deckschicht A | | | | | |
| Antiblock-Konzentration | 500 bis 2500 | 600 bis 2200 | 700 bis 1900 | ppm | |
| Durchmesser der Antiblockteilchen | 10 bis 60 nm und/oder 1,0 bis 5,0 $\mu$m | 10 bis 60 nm und/oder 1,0 bis 5,0 $\mu$m | 10 bis 60 nm und/oder 1,0 bis 5,0 $\mu$m | | |
| SPAN 98 des Partikeldurchmessers | < 1,9 | < 1,8 | < 1,7 | | |
| Folieneigenschaften | | | | | |
| Glanz | > 180 | > 190 | > 200 | | DIN 67 530 |
| Trübung | < 2,5 | < 2,2 | < 1,9 | % | ASTM-D 1003-52 |
| Reibungskoeffizient (COF) der acrylisch beschichteten Seite gegen sich selbst bei der besonders bevorzugten ABA Variante | < 0,5 | < 0,45 | < 0,4 | | DIN 53 375 |

**Messmethoden**

Zur Charakterisierung der Rohstoffe und der Folien wurden die folgenden Methoden benutzt:

SV-Wert (Standard Viskosität)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

Reibung

Die Reibung wurde nach DIN 53 375 bestimmt. Die Gleitreibungszahl wurde 14 Tage nach der Produktion gemessen.

Trübung

Die Trübung der Folie wurde nach ASTM-D 1003-52 gemessen. Die Trübungsmessung nach Hölz wurde in Anlehnung an ASTM-D 1003-52 durchgeführt, wobei jedoch zur Ausnutzung des optimalen Messbereichs an vier übereinander liegenden Folienlagen gemessen und anstelle einer 4°-Lochblende eine 1 °-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Messung des mittleren Partikeldurchmessers $d_{50}$

Die Bestimmung des mittleren Partikeldurchmessers $d_{50}$ wurde mittels Laser auf einem Malvern MasterSizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$- Wert.

Messung der SPAN 98

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN98 = \frac{d_{98} - d_{10}}{d_{50}}$$

Für die Ermittlung von $d_{98}$ und $d_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes der Summenkurve liefert auf der Abszissenachse sofort den gewünschten $d_{10}$-Wert.

Die folgenden Ausführungsbeispiele illustrieren die Erfindung noch deutlicher.

Beispiel 1

Die erfindungsgemäße Beschichtung D enthält eine 4,5 Gew.-%ige Lösung eines Latex', bestehend aus einem Copolymeren aus 60 Gew.-% Methylmethacrylat, 35 Gew.-% Ethylacrylat und 5 Gew.-% N-Methylolacrylamid und eines Tensids. Es erfolgte die Beschichtung der Deckschicht A der Folie gemäß der vorliegenden Erfindung.

Es wurden Chips aus Polyethylenterephthalat bei 160 °C auf eine Restfeuchte von weniger als 50 ppm getrocknet und dem Extruder für die Basisschicht B zugeführt. Ebenfalls wurden Chips aus Polyethylenterephthalat und einem Füllstoff den Extrudern für die Deckschichten A und C zugeführt. Durch Koextrusion und anschließende stufenweise Orientierung in Längsrichtung wurde eine uniaxial orientierte Folie erhalten, die Corona-behandelt und mittels des Reversgravurverfahrens mit der zuvor beschriebenen Dispersion beschichtet wurde. Das Trockengewicht der Beschichtung betrug ca. 0,035 g/m² (bezogen auf die biaxial gestreckte Folie). Die so längsgestreckte Folie wurde in Querrichtung zu einer transparenten dreischichtigen Folie mit ABC-Aufbau und einer Gesamtdicke von 12 μm gestreckt. Die beiden Deckschichten hatten eine Dicke von jeweils 1,5 μm.

Basisschicht B:

100 Gew.-%     Polyethylenterephthalat (RT 49 von KoSa) mit einem SV-Wert von 800 und

Deckschichten A und C:

  92 Gew.-%    Polyethylenterephthalat (RT 49 der Firma KoSa) mit einem SV-Wert von 800 und
  8 Gew.-%     Masterbatch aus 99 Gew.-% Polyethylenterephthalat und 1,0 Gew.-% Kieselsäurepartikel (®Sylobloc 44 H der Firma Grace) mit einer mittleren Teilchengröße von 2,5 μm.

Die einzelnen Verfahrensschritte waren:

| Extrusion: | Temperaturen | A-Schicht: | 300 °C |
|---|---|---|---|
| | | B-Schicht: | 300 °C |
| | | C-Schicht: | 300 °C |
| | Düsenspaltweite: | | 1 mm |
| | Temperatur der Abzugswalze: | | 30 °C |
| Längsstreckung: | Temperatur: | | 80 - 115 °C |
| | (Aufheizung 80 - 115 °C, Streckung bei 115 °C) | | |
| | Längsstreckverhältnis: | | 4,5 |
| Querstreckung: | Temperatur: | | 80 - 155 °C |
| | Querstreckverhältnis: | | 4,0 |
| Fixierung: | Temperatur: | | 230 °C |
| Dauer: | | | 3 s |

Es wurde eine Folie mit sehr guten optischen Eigenschaften, einem sehr guten Verarbeitungsverhalten und einer sehr guten Wickelqualität erzielt (vgl. Tabelle 3).

Beispiel 2

Analog zu Beispiel 1 wurde durch Koextrusion eine dreischichtige ABA Folie mit einer Gesamtdicke von 12 μm hergestellt. Es wurde nur die Zusammensetzung der beiden Deckschichten A (= C) geändert:

Deckschichten A und C:

  92 Gew.-%    Polyethylenterephthalat (RT 49 der Firma KoSa) mit einem SV-Wert von 800 und
  8 Gew.-%     Masterbatch aus 98 Gew.-% Polyethylenterephthalat, 1,0 Gew.-% Kieselsäurepartikel (®Sylysia 300 von der Fa. Fuji/Japan) mit einem $d_{50}$-Wert von 2,0 μm und einer SPAN 98 von 1,4 und 1,0 Gew.-% Aerosil TT600 (Fa. Degussa).

Beispiel 3

Analog zu Beispiel 1 wurde durch Koextrusion eine dreischichtige ABC Folie mit einer Gesamtdicke von 12 μm hergestellt. Es wurde nur die Zusammensetzung der beiden Deckschichten A und C geändert. Wie in den beiden Beispielen zuvor erfolgte die Beschichtung der Deckschicht A der Folie gemäß der vorliegenden Erfindung.

Deckschicht A:

| 98 Gew.-% | Polyethylenterephthalat (RT 49 der Firma KoSa) mit einem SV-Wert von 800 und |
| 2 Gew.-% | Masterbatch aus 98 Gew.-% Polyethylenterephthalat, 1,0 Gew.-% Kieselsäurepartikel (®Sylobloc 44 H der Firma Grace) mit einer mittleren Teilchengröße von 2,5 $\mu$m und 1,0 Gew.-% Aerosil TT600 (Fa. Degussa). |

Deckschicht C:

| 88 Gew.-% | Polyethylenterephthalat (RT 49 der Firma KoSa) mit einem SV-Wert von 800 und |
| 12 Gew.-% | Masterbatch aus 98 Gew.-% Polyethylenterephthalat und 1,0 Gew.-% Kieselsäurepartikel (®Sylobloc 44 H der Firma Grace) mit einer mittleren Teilchengröße von 2,5 $\mu$m und 1,0 Gew.-% Aerosil TT600 (Fa. Degussa). |

Beispiel 4

Analog zu Beispiel 1 wurde durch Coextrusion eine dreischichtige ABA Folie mit einer Gesamtdicke von 12 $\mu$m hergestellt Es wurde nur die Zusammensetzung der beiden Deckschichten A (= C) geändert:

Deckschichten A und C aus:

| 90 Gew.-% | Polyethylenterephthalat mit einem SV-Wert von 800 |
| 10 Gew.-% | Masterbatch aus 99 Gew.-% Polyethylenterephthalat und 1,0 Gew.-% Kieselsäurepartikel (®Sylysia 300 von der Fa. Fuji/Japan) mit einem $d_{50}$-Wert von 2,0 $\mu$m und einer SPAN 98 von 1,4. |

Vergleichsbeispiel 1

Es wurde Beispiel 1 nachgearbeitet, jedoch enthielt jetzt die Folie keine Beschichtung D. Die Folie zeigt zwar eine gute Optik, war jedoch deutlich schlechter im Verarbeitungsverhalten. Außerdem ließ die Wickelqualität zu wünschen übrig.

Tabelle 2

| Beispiel | Foliendicke μm | Folienaufbau | Schichtdicken A B C μm | Pigmente in den Schichten | | | mittlerer Pigment-Durchmesser | | | Pigmentkonzentrationen | | |
|---|---|---|---|---|---|---|---|---|---|---|---|---|
| | | | | A | B | C | A | B μm | C | A | B ppm | C |
| Beispiel 1 | 12 | DABA | 1,5/9,0/1,5 | Sylobloc 44 H | keine | Sylobloc 44 H | 2,5 | | 2,5 | 800 | 0 | 800 |
| Beispiel 2 | 12 | DABA | 1,5/9,0/1,5 | Sylysia 300 Aerosil TT 600 | keine | Sylysia 300 Aerosil TT 600 | 2,5 0,04 | | 2,5 0,04 | 800 800 | 0 0 | 800 800 |
| Beispiel 3 | 12 | DABC | 1,5/9,0/1,5 | Sylobloe 44 H Aerosil TT 600 | keine | Sylobloc 44 H Aerosil TT 600 | 2,5 0,04 | | 2,5 0,04 | 200 200 | 0 0 | 1200 1200 |
| Beispiel 4 | 12 | DABA | 1,5/9,0/1,5 | Sylysia 300 | keine | Sylysia 300 | 2,0 | | 2,0 | 1000 | 0 | 1000 |
| VB 1 | 12 | ABA | 1,5/9,0/1,5 | Sylobloc 44 H | keine | Sylobloc 44 H | 2,5 | | 2,5 | 800 | 0 | 800 |

Tabelle 3

| Beispiele | Glanz | | Trübung | Reibung | | | Rauigkeit $R_a$ | | | Verarbeitungsverhalten | Wickelqualität |
|---|---|---|---|---|---|---|---|---|---|---|---|
| | D | A bzw.C | | D/D | A/A | C/C | D nm | A nm | C-Seite nm | | |
| Beispiel 1 | 210 | 210 | 1,5 | 0,36 | 0,55 | 0,55 | 42 | 43 | 43 | gut | gut |
| Beispiel 2 | 195 | 195 | 1,7 | 0,34 | 0,5 | 0,5 | 55 | 55 | 55 | sehr gut | sehr gut |
| Beispiel 3 | 220 | 185 | 1,4 | 0,37 | 0,9 | 0,45 | 35 | 35 | 65 | sehr gut | sehr gut |
| Beispiel 4 | 210 | 210 | 1,5 | 0,32 | 0,5 | 0,5 | 50 | 50 | 50 | sehr gut | sehr gut |
| VB1 | 210 | 210 | 1,5 | 0,36 | 0,55 | 0,55 | 42 | 43 | 43 | zeigt Mängel | Rolle zeigt Längsrillen |

**Patentansprüche**

1. Coextrudierte, mindestens zweischichtige, transparente, biaxial orientierte Polyesterfolie mit mindestens einer Basisschicht B, die mindestens 80 Gew.-% thermoplastischen Polyester enthält, mindestens einer auf der Basisschicht B coextrudierten Deckschicht A und mindestens einer acrylischen Beschichtung D, **dadurch gekennzeichnet, dass**

   a) die Basisschicht B nur solche Füllstoffe enthält, die über eine Regenerierung von Verschnittmaterial in die Basisschicht B eingebracht werden;
   b) die Deckschicht A Füllstoffe in einer Menge von 500 bis 2500 ppm enthält, bezogen auf das Gewicht der Deckschicht A,
   c) die Füllstoffe im Wesentlichen aus $SiO_2$ bestehen mit einem mittleren Partikeldurchmesser $d_{50}$ von 10 bis 60 nm und/oder 1,0 bis 5 $\mu$m; und dass
   d) mindestens eine der beiden Folienoberflächen eine durchgehende vernetzte acrylische Beschichtung D trägt, die als wässrige Dispersion auf die Folie aufgebracht wird.

2. Folie nach Anspruch 1, **dadurch gekennzeichnet, dass** sie dreischichtig ist und aus der Basisschicht B und den Deckschichten A und C auf beiden Seiten der Basisschicht B besteht.

3. Folie nach Anspruch 1, **dadurch gekennzeichnet, dass** sie dreischichtig ist und aus der Basisschicht B und den Deckschichten A und C, mit A = C, auf beiden Seiten der Basisschicht B besteht.

4. Folie nach einem oder nach mehreren der Ansprüche 1 bis 3, **dadurch gekennzeichnet, dass** die coextrudierte Deckschicht A und ggf. die coextrudierte Deckschicht C Füllstoffe enthält, bei denen die Streuung des Teilchendurchmessers d, ausgedrückt als SPAN98, kleiner/gleich 1,9 ist.

5. Folie nach einem oder nach mehreren der Ansprüche 1 bis 4, **dadurch gekennzeichnet, dass** die acrylische Beschichtung D ein Emulsionscopolymer aus Alkylacrylat und Alkylmethacrylat enthält, bei dem das Acrylatcomonomer in einem Anteil von 15 bis 65 mol-% anwesend ist und das Methacrylatcomonomer in einem Anteil von 35 bis 85 mol-%, bezogen auf die Gesamtmenge an Emulsionscopolymer, wobei zusätzlich noch zur Ausbildung von Vernetzungen geeignete weitere Comonomere wie N-Methylolacrylamid oder N-Methylolmethacrylamid vorhanden sind.

6. Verfahren zum Herstellen einer Folie nach einem oder nach mehreren der Ansprüche 2 bis 5, umfassend die Schritte:

   ► Herstellen einer mehrschichtigen Folie aus einer Basisschicht B und Deckschicht(en) A und ggf. C durch Koextrusion;
   ► biaxiales Strecken der Folie, zuerst in Längs- und dann in Querrichtung;
   ► Beschichten der Folie mit der acrylischen vernetzenden Beschichtung D, vorzugsweise nach dem ersten und vor dem zweiten Streckschritt;
   ► Thermofixieren der gestreckten Folie.

7. Verfahren nach Anspruch 6, **dadurch gekennzeichnet, dass** der Basisschicht B eine Menge von bis zu 60 Gew.-%, bezogen auf das Gewicht der Basisschicht, an Verschnittmaterial als Regenerat zugesetzt wird.

8. Verwendung einer Folie nach einem oder nach mehreren der Ansprüche 1 bis 5 zum Bedrucken und/oder Metallisieren.

9. Verwendung einer Folie nach einem oder nach mehreren der Ansprüche 1 bis 5 zum Verpacken von Nahrungs- und Genussmitteln.

**Claims**

1. A coextruded, at least two-layer, transparent, biaxially oriented polyester film with at least one base layer B which comprises at least 80 % by weight of thermoplastic polyester, and with at least one overlayer A coextruded on the base layer B, and with at least one acrylic coating D, wherein

   a) fillers present in the base layer B are only those which are introduced into the base layer B by way of reground cut material;

b) the overlayer A comprises an amount of from 500 to 2500 ppm of fillers, based on the weight of the overlayer A,

c) the fillers are substantially composed of $SiO_2$ with a median particle diameter $d_{50}$ of from 10 to 60 nm and/or from 1.0 to 5 $\mu$m; and wherein

d) at least one of the two surfaces of the film has a continuous crosslinked acrylic coating D which is applied in the form of an aqueous dispersion to the film.

2. The film as claimed in claim 1, which has three layers and is composed of the base layer B and the overlayers A and C on the two sides of the base layer B.

3. The film as claimed in claim 1, which has three layers and is composed of the base layer B and the overlayers A and C, where A = C, on the two sides of the base layer B.

4. The film as claimed in one or more of claims 1 to 3, wherein the coextruded overlayer A and, where appropriate, the coextruded overlayer C, comprises fillers in which the spread of the particle diameter d, expressed as SPAN98, is smaller than or equal to 1.9.

5. The film as claimed in one or more of claims 1 to 4, wherein the acrylic coating D comprises an emulsion copolymer composed of alkyl acrylate and alkyl methacrylate, in which the proportion of the acrylate comonomer present is from 15 to 65 mol% and the proportion of the methacrylate comonomer is from 35 to 85 mol%, based on the total amount of emulsion copolymer, suitable other comonomers, such as N-methylolacrylamide or N-methylolmethacrylamide, also being present in order to develop crosslinking.

6. A process for producing a film as claimed in one or more of claims 2 to 5, encompassing the steps of:

► producing a multilayer film composed of a base layer B and overlayer (s) A and, where appropriate, C, by coextrusion;

► biaxial stretching of the film, first longitudinally and then transversely;

► coating of the film with the crosslinking acrylic coating D, preferably after the first stretching step and prior to the second stretching step;

► heat-setting of the stretched film.

7. The process as claimed in claim 6, wherein an amount of up to 60 % by weight, based on the weight of the base layer, of reground cut material is added to the base layer B.

8. The use of a film as claimed in one or more of claims 1 to 5 for printing and/or metalizing.

9. The use of a film as claimed in one or more of claims 1 to 5 for the packaging of foods or of other consumable items.

**Revendications**

1. Feuille en polyester, orientée biaxalement, transparente, coextrudée et comprenant d'au moins deux couches, avec au moins une couche de base B contenant au moins 80 % en poids de polyester thermoplastique, au moins une couche de finition A qui est coextrudée sur la couche de base B et au moins un revêtement acrylique D, **caractérisée en ce que**

a) les charges contenues dans la couche de base B contient des charges qui sont uniquement issues de la régénération de chutes de coupe récupérées pour être introduites dans la couche de base B ;

b) la couche de finition A contient des charges en une quantité de 500 à 2500 ppm, par rapport au poids de la couche de finition A ;

c) les charges sont essentiellement composées de $SiO_2$, le diamètre moyen de particules $d_{50}$ se situant entre 10 et 60 nm et/ou entre 1,0 et 1,5 $\mu$m ; et que

d) au moins une des deux faces de la feuille est pourvue d'un revêtement acrylique D continu et réticulé, qui est déposé sur la feuille sous forme de dispersion aqueuse.

2. Feuille selon la revendication 1, **caractérisée en ce qu'**elle comporte trois couches et **en ce qu'**elle est constituée de la couche de base A et des couches de finition A et C sur les deux faces de la couche de base B.

**3.** Feuille selon la revendication 1, **caractérisée en ce qu'**elle comporte trois couches et **en ce qu'**elle est constituée de la couche de base B et des couches de finition A et C, avec A = C, sur les deux faces de la couche de base B.

**4.** Feuille selon une ou plusieurs des revendications 1 à 3, **caractérisée en ce que** la couche de finition coextrudée A et, le cas échéant, la couche de finition coextrudée C contiennent des charges dont le diamètre des particules d présente une variance, exprimée comme SPAN98, inférieure ou égale à 1,9.

**5.** Feuille selon une ou plusieurs des revendications 1 à 4, **caractérisée en ce que** le revêtement acrylique D contient un copolymère en émulsion à base d'acrylate d'alkyle et de méthacrylate d'alkyle, dont le comonomère d'acrylate est présent dans une proportion comprise entre 15 et 65 % molaires et le comonomère de méthacrylate dans une proportion comprise entre 35 et 85 % molaires, par rapport à la quantité totale du copolymère d'émulsion, d'autres comonomères appropriés comme le N-méthyloacrylamide ou le N-méthylométhacrylamide pouvant également être présents pour former des réticulations.

**6.** Procédé de fabrication d'une feuille selon une ou plusieurs des revendications 2 à 5, comprenant les étapes suivantes :

- réalisation par coextrusion d'une feuille comportant plusieurs couches et constituée d'une couche de base B ainsi que d'une couche / de couches finition A et, le cas échéant, C ;
- orientation biaxiale de la feuille, d'abord dans le sens longitudinal puis dans le sens transversal ;
- enduction de la feuille avec le revêtement acrylique réticulant D, de préférence après la première étape d'orientation et avant la deuxième étape d'orientation ;
- thermofixage de la feuille orientée.

**7.** Procédé selon la revendication 6, **caractérisé en ce qu'**on ajoute à la couche de base B une quantité pouvant atteindre 60 % en poids, par rapport au poids de la couche de base, de chutes de coupes régénérées.

**8.** Utilisation d'une feuille selon une ou plusieurs des revendications 1 à 5 pour une impression et/ou une métallisation.

**9.** Utilisation d'une feuille selon une ou plusieurs des revendications 1 à 5 pour emballer des aliments et des produits de consommation.

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0144978 A
- EP 0144948 A
- EP 0903221 A
- EP 1197328 A
- EP 0602964 A